# EUROPEAN PATENT SPECIFICATION

(11) **EP 3 712 785 B1**
(45) Date of publication and mention of the grant of the patent: **18.05.2022**
(21) Application number: 20164393.9
(22) Date of filing: 20.03.2020
(51) Int. Cl.: G06F 17/16, G06N 3/04, G06N 3/063

(54) **OPERATION METHOD, APPARATUS AND RELATED PRODUCTS**
BETRIEBSVERFAHREN, VORRICHTUNG UND ZUGEHÖRIGE PRODUKTE
PROCÉDÉ DE FONCTIONNEMENT, APPAREIL ET PRODUITS ASSOCIÉS

(30) Priority: 21.03.2019 CN 201910216313
(43) Date of publication of application: 23.09.2020
(73) Proprietor: Cambricon Technologies Corporation Limited, Beijing 100191 (CN)
(72) Inventor: MENG, Xiaofu, Beijing 100191 (CN); WU, Zhihui, Beijing 100191 (CN); LI, Wei, Beijing 100191 (CN); LI, Tao, Beijing 100191 (CN)
(74) Representative: Huang, Liwei

(56) References cited:
- M.C.J. Peemen: "Improving the efficiency of deep convolutional networks", PhD Thesis, 12 October 2017 (2017-10-12), pages 1-171, XP055587386, Retrieved from the Internet: URL:https://pure.tue.nl/ws/files/77700147/ 20171012_Peemen.pdf [retrieved on 2019-05-09]
- ZHIQIANG LIU ET AL: "Throughput-Optimized FPGA Accelerator for Deep Convolutional Neural Networks", ACM TRANSACTIONS ON RECONFIGURABLE TECHNOLOGY AND SYSTEMS, vol. 10, no. 3, 19 July 2017 (2017-07-19), pages 17:1-17:23, XP055555766, US ISSN: 1936-7406, DOI: 10.1145/3079758
- Renzo Andri ET AL: "YodaNN: An Architecture for Ultra-Low Power Binary-Weight CNN Acceleration", IEEE Transactions on Computer-Aided Design of Integrated Circuits and Systems, 24 February 2017 (2017-02-24), XP055690573, DOI: 10.3929/ethz-b-000219268 Retrieved from the Internet: URL:https://arxiv.org/pdf/1606.05487.pdf [retrieved on 2020-04-30]

## Description

### Technical Field

The disclosure relates generally to the field of information processing technology, and more specifically to an operation method, an apparatus and related products.

### Background

In the field of artificial intelligence technology, neural network algorithms are a set of machine learning algorithms that are very popular recently, which has excellent performance in various fields, such as image recognition, speech recognition, natural language processing, *etc.* With the development of neural network algorithms, the algorithms have become more complex. In order to improve the recognition, the scale of models is also gradually increasing. Processing these large-scale models with GPU and CPU takes a lot of computation time and consumes a lot of power. In this case, a new artificial intelligence processor is proposed to improve the operation speed of the neural network model, which may save operation time and reduce power consumption. However, current algorithmic support for a new artificial intelligence processor is far from adequate.

### Summary

The present invention is defined by the appended independent claims 1, 8 and 9. Preferred embodiments are set forth in the dependent claims.

The present disclosure may improve the operation performance of the operation units and the processing efficiency of the processor.

In order to make other features and aspects of the present disclosure clearer, a detailed description of exemplary embodiments with reference to the drawings is provided below.

### Brief Description of the Drawings

The accompanying drawings contained in and forming part of the specification together with the specification show exemplary embodiments, features and aspects of the present disclosure and are used to explain the principles of the disclosure.
Fig. 1 is a flowchart of an input data processing method according to an embodiment of the present disclosure.
Fig. 2 is another flowchart of an input data processing method according to an embodiment of the present disclosure.
Fig. 3 is a flowchart of a step S131 of an input data processing method according to an embodiment of the present disclosure.
Fig. 4 is another flowchart of an input data processing method according to an embodiment of the present disclosure.
Fig. 5 is a block diagram of an input data processing apparatus according to an embodiment of the present disclosure.
Fig. 6 is another block diagram of an input data processing apparatus according to an embodiment of the present disclosure.
Fig. 7 is a block diagram of a first processor according to an embodiment of the present disclosure.

### Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

For an artificial intelligence processor with a plurality of operation units, to achieve the best operation performance of an artificial processor, it is necessary to make as many operation units as possible participate in effective operations, however, for the artificial intelligence processor, only a row of input data in a certain dimension is computed in a round of computation. For example, the input data may be data describing an image in NHWC (batch, height, width, channels) format, where N represents a count of batches, C represents a count of channels (for example, RGB), H represents height, and W represents width. Only a row of input data in C dimension is computed in a round of computation.

If the count of input data in a row in a dimension is less than the count of operation units, then some operation units do not participate in the operation process. Alternatively, the input data is complemented by 0 in the direction of this dimension until the dimension number is equal to the count of the operation units. In this way, some operation units perform invalid operations. In the above process, the operation performance of the operation units has not been well delivered, and the operation efficiency is low.

In order to solve the above technical problems, the present disclosure provides an input data processing method.

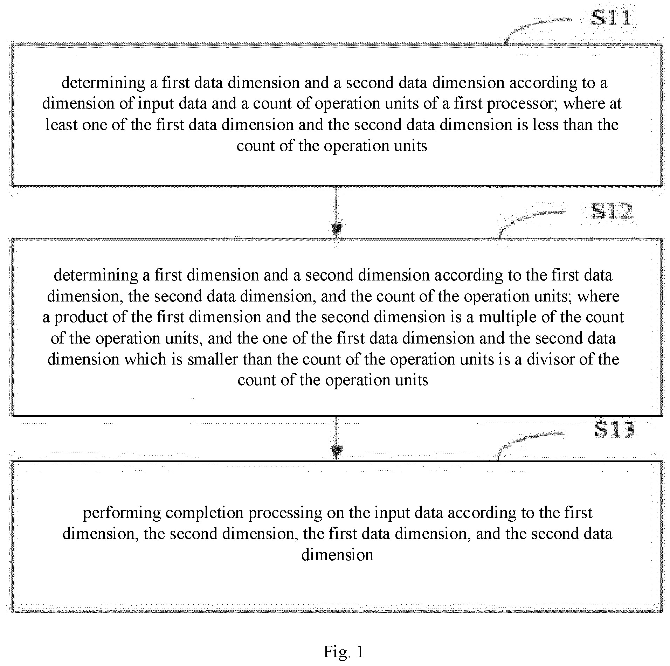

Fig. 1 is a flowchart of an input data processing method according to an embodiment of the present disclosure. The method may be applied to a processor, and the processor may be a general-purpose processor. For example, the processor may be a Central Processing Unit (CPU), a Graphics Processing Unit (GPU), or the like. The processor may also be an artificial intelligence processor for performing artificial intelligence operations, where the artificial intelligence operations may include machine learning operations, brain-like operations, and the like, where the machine learning operations may include neural network operations, k-means operations, support vector machine operations, and the like. The artificial intelligence processor may include one or a combination of, for example, an NPU (Neural-Network Processing Unit), a DSP (Digital Signal Processing) unit, and an FPGA (Field-Programmable Gate Array) chip. The artificial intelligence processor may include a plurality of operation units, and the plurality of operation units may perform operations in parallel.

As shown in Fig. 1, the processing method may include:
step S11: determining a first data dimension and a second data dimension according to a dimension of input data and a count of operation units of a first processor, where at least one of the first data dimension and the second data dimension is less than the count of the operation units;
step S12: determining a first dimension and a second dimension according to the first data dimension, the second data dimension, and the count of the operation units, where a product of the first dimension and the second dimension is a multiple of the count of the operation units, and the one of the first dimension and the second dimension which is smaller than the count of the operation units is a divisor of the count of the operation units; and
step S13: performing completion processing on the input data according to the first dimension, the second dimension, the first data dimension, and the second data dimension.

In this way, a data dimension that is smaller than the count of the operation units of the first processor among the dimensions of the input data is determined, and the dimension (the first dimension or the second dimension) to which the input data needs to be completed according to the determined data dimension and the count of the operation units is further determined; and then completion processing is performed on the input data according to the first dimension, the second dimension, the first data dimension, and the second data dimension. When inputting input data to the operation units, data can be taken from the input data according to the first dimension and the second dimension, which is equivalent to performing dimensionality reduction on the input data. The present disclosure may improve the operation performance of the operation units and the processing efficiency of the processor.

The input data may be image data, for example, color image data or grayscale image data; the input data may also be audio or video data, *etc.* The embodiments of the present disclosure do not limit the actual physical meaning of the input data.

In a possible embodiment, the input data may be data that uses a multi-dimensional tensor to describe the actual physical quantity. For example, the input data may be data that uses the NHWC format to describe the image, where C represents a count of channels (for example, RGB), and the input data may also be data that describes sound using a multi-dimensional tensor (for example, an MFCC feature, a Mel-Frequency Cepstral Coefficients feature).

For example, the input data is data describing the image using (R, G, B). The image data contains a plurality of pixels arranged in a matrix, where dimensions of height and width of the matrix may represent the resolution of the image, and the information of each pixel can be represented by (R, G, B).

In an example, it is assumed that the R, G, and B values of each pixel are equal. As shown in Table 1, the input data of an image may include 3 groups of data as shown in Table 1:

**Table1 R (G or B) values of a picture**

| | | | | | | |
|---|---|---|---|---|---|---|
| 1 | 2 | 3 | 4 | 5 | 6 | 7 |
| 8 | 9 | ... | .. | ... | | ... |
| ... | | | | | | ... |
| ... | | | | | | ... |
| ... | | | | | | ... |
| ... | | | | | | ... |
| ... | | | | | | ... |
| ... | | | | | | ... |
| 13 | 15 | 17 | 19 | ... | ... | ... |

For the input data of such image, the dimension represented by the NHWC format is (N × 9 × 7 × 3). The method provided by the present disclosure does not involve the processing in the direction of the N direction, instead, it mainly discusses the HWC dimensions.

The first processor includes a plurality of operation units. For example, the first processor may be an artificial intelligence processor for performing artificial intelligence operations as described above. Assuming that the count of the operation units of the first processor is 9 and taking the above image data as an example, the first data dimension and the second data dimension may be 3 and 7, or 3 and 9, or 7 and 9.

When all the dimensions of the input data are larger than the count of the operation units in the first processor, the input data is directly completed according to the difference between a dimension number in the dimensional direction where the input data is read and written firstly and the count of the operation units. For example, if the count of the operation units is 4, and a dimension number in the dimensional direction where the input data is read and written firstly is 7, the operation units need to process a row of data in the lowest dimension twice, that is, the operation units process 4 pieces of data for the first time, and then process the last 4 pieces of data for the second time, where the last one of the 4 pieces of data processed in the second time may be 0 used for completing. For example, a row of input data in the lowest dimension is (1, 2, 3, 4, 5, 6, 7), after being completed, the row of input data in the lowest dimension is (1, 2, 3, 4, 5, 6, 7, 0), and then, the row of input data in the lowest dimension is input to the operation units for operation.

When the lowest dimension of the input data is equal to the count of the operation units, each operation unit participates in effective operations, so that the operation performance is maximized. The operation can be performed directly, and there is no need to complete the input data.

Therefore, by using the input data processing method of the present disclosure, at least one data dimension that is smaller than the count of the operation units among the dimensions of the input data may be obtained, and then the input data may be completed by the obtained data dimension, thereby improving the operation performance of the operation units.

In a possible embodiment, the first data dimension is a lowest dimension among the dimensions of the input data, and the second data dimension is a second lowest dimension among the dimensions of the input data, where the lowest dimension may be a dimension with the smallest number among the dimensions of the input data, and the second lowest dimension is a dimension that is only higher than the lowest dimension.

In another possible embodiment, both the first data dimension and the second data dimension are smaller than the count of the operation units, where the first data dimension and the second data dimension may be dimensions closest to the count of the operation units among the dimensions of the input data.

Alternatively, in another possible embodiment, the first data dimension is a dimension where the input data is read and written firstly, and the second data dimension is a dimension where the input data is read and written secondly. For example, for the NHWC format, N represents a count of batches, C represents a count of channels, H represents height, and W represents width, and the C dimension is a dimension where the input data is read and written firstly, and the W dimension is a dimension where the input data is read and written secondly. In this example, the method of the present disclosure may not include the step S11. The input data processing method provided by the present disclosure may include: when the first data dimension of the input data is smaller than the count of the operation units of the first processor, determining the first dimension and the second dimension according to the first data dimension and the second data dimension of the input data, and the count of the operation units, where the first dimension is the divisor of the count of the operation units, and the first dimension is greater than or equal to the dimension number of the first data dimension, the product of the first dimension and the second dimension is the multiple of the count of the operation units, and the second dimension is greater than or equal to the dimension number of the second data dimension; and performing completion processing on the input data according to the first dimension, the second dimension, the first data dimension, and the second data dimension. The above-mentioned examples are just some examples of determining the first data dimension and the second data dimension, and do not limit the present disclosure in any way. It is only required that at least one of the first data dimension and the second data dimension is less than the count of the operation units.

In a possible embodiment, for the step S12, the first dimension may be determined according to the smaller one of the first data dimension and the second data dimension, and the count of the operation units; and the second dimension may be determined according to the larger one of the first data dimension and the second data dimension, and the first dimension and the count of the operation units.

The first dimension is the divisor of the count of the operation units, the first dimension is greater than or equal to the smaller one of the first data dimension and the second data dimension, and the second dimension is greater than or equal to the larger one of the first data dimension and the second data dimension. In a possible embodiment, the first dimension may be the smallest divisor of the count of the operation units, and the first dimension is greater than or equal to the smaller one of the first data dimension and the second data dimension. The product of the first dimension and the second dimension may be the smallest multiple of the count of the operation units, and the second dimension is greater than or equal to the larger one of the first data dimension and the second data dimension. Determining the first dimension and the second dimension as the minimum data satisfying the above conditions can maximize the operation performance of the operation units and improve the processing efficiency of the processor.

The above process is an example of the embodiments of the present disclosure. If both the first data dimension and the second data dimension are smaller than the count of the operation units, the first dimension may also be determined according to the count of the operation units and any one of the first data dimension and the second data dimension, and then the second dimension may also be determined. The process of determining the first dimension and the second dimension is not limited in this disclosure. It is only required that the product of the first dimension and the second dimension is the multiple of the count of the operation units, and the one of the first dimension and the second dimension which is smaller than the count of the operation units is the divisor of the count of the operation units.

In a possible embodiment, if the first data dimension is a dimension where the input data is read and written firstly, and the second data dimension is a dimension where the input data is read and written secondly, the step S12 may include: determining the first dimension according to the first data dimension and the count of the operation units; and then determining the second dimension according to the second data dimension, the first dimension, and the count of the operation units, where the first dimension is the divisor of the count of the operation units, and the first dimension is greater than or equal to the dimension number of the first data dimension; the product of the first dimension and the second dimension is the multiple of the count of the operation units, and the second dimension is greater than or equal to the dimension number of the second data dimension.

In a possible embodiment, the first dimension may be the smallest divisor of the count of the operation units, and the product of the first dimension and the second dimension may be the smallest multiple of the count of the operation units.

The following still uses the above example for exemplary description. The first data dimension and the second data dimension can be 3 and 7, and the count of the operation units is 9, then it can be determined that the first dimension is 3, the second dimension is 9, and the first dimension 3 is a divisor of 9 (the count of the operation units), and the product of the first dimension and the second dimension is 27, which is a multiple of 9 (the count of the operation units).

In a possible embodiment, the step S13 may include: completing the input data according to the relationship between the first dimension and the smaller one of the first data dimension and the second data dimension; and completing the input data according to the relationship between the second dimension and the larger one of the first data dimension and the second data dimension.

For example, if the smaller one of the first data dimension and the second data dimension is smaller than the first dimension, the input data is complemented to the first dimension in the dimension direction of the smaller one of the first data dimension and the second data dimension; if the larger one of the first data dimension and the second data dimension is smaller than the second dimension, the input data is complemented to the second dimension in the dimension direction of the larger one of the first data dimension and the second data dimension.

If the smaller one of the first data dimension and the second data dimension is equal to the first dimension, the completion processing is not required. If the larger one of the first data dimension and the second data dimension is equal to the second dimension, the completion processing is not required.

In another possible embodiment, if the first data dimension is a dimension where the input data is read and written firstly, and the second data dimension is a dimension where the input data is read and written secondly, the step S13 may include:
when the first dimension is larger than a dimension number of the first data dimension, completing the input data to the first dimension in the direction of the first data dimension; and
when the second dimension is larger than the second data dimension, completing the input data to the second dimension in the direction of the second data dimension.

If the first dimension is equal to the dimension number of the first data dimension, there is no need to perform completion processing in the direction of the first data dimension; similarly, if the second dimension is equal to the dimension number of the second data dimension, there is no need to perform completion processing in the direction of the second data dimension.

For example, in the above example, the input data may be complemented by 0 until the dimension number of the second data dimension becomes 9. The completed input data may include 3 groups of data as shown in the following table:

**Table 2 completed R (G or B) values**

| 1 | 2 | 3 | 4 | 5 | 6 | 7 | 0 | 0 |
|---|---|---|---|---|---|---|---|---|
| 8 | 9 | ... | .. | ... | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| 13 | 15 | 17 | 19 | ... | ... | ... | 0 | |

When performing an operation, a group of data (1,1,1,2,2,2,3,3,3) is taken in sequence and input into 9 operation units for operation, and then a group of data (4,4,4,5,5,5,6,6,6) is taken and input to 9 operation units for operation, and then a group of data (7,7,7,0,0,0,0,0,0) is taken and input to 9 operation units for operation.

If the operation is performed by using the prior art, 7 operations are needed to complete the operation of the first row of data. While if the operation is performed by using the input data processing method provided by the present disclosure, only 3 operations are needed to complete the operation of the first row of data, which can reduce the original 7 dimensions to 3 dimensions, and increase the operation efficiency by more than 2 times.

The above-mentioned data is just the example of the present disclosure and does not limit the present disclosure in any way.

In order to facilitate understanding the method of the embodiments of the present disclosure, in the following, the method provided by the present disclosure is further described using an example: the first data dimension serves as the lowest dimension among the dimensions of the input data, and the second data dimension serves as the second lowest dimension among the dimensions of the input data.

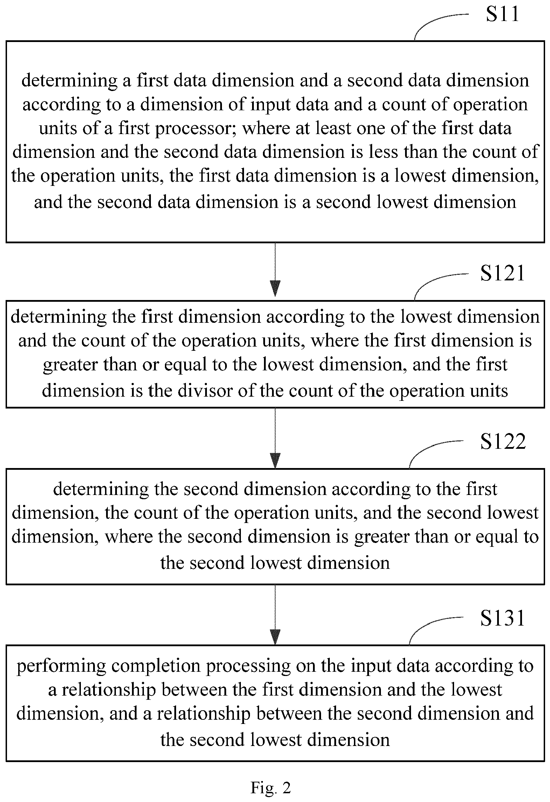

Fig. 2 illustrates another flowchart of an input data processing method according to an embodiment of the present disclosure. As shown in Fig. 2, the step S12 further includes:
step S121: determining the first dimension according to the lowest dimension and the count of the operation units, where the first dimension is greater than or equal to the lowest dimension, and the first dimension is the divisor of the count of the operation units; and
step S122: determining the second dimension according to the first dimension, the count of the operation units, and the second lowest dimension, where the second dimension is greater than or equal to the second lowest dimension.

The step S13 may include:
step S131: performing completion processing on the input data according to a relationship between the first dimension and the lowest dimension, and a relationship between the second dimension and the second lowest dimension.

In this way, the first dimension can be determined according to the relationship between the lowest dimension of the input data and the count of the operation units, and the second dimension can be determined according to the first dimension, the count of the operation units, and the second lowest dimension of the input data, and the completion processing may be performed on the input data according to the first dimension and the second dimension. Because the count of the operation units is a multiple of the first dimension, and the product of the second dimension and the first dimension is a multiple of the count of the operation units, which is equivalent to performing dimension reduction processing on the original data in the second lowest dimension. The method may thus improve the operation performance of the operation units and the processing efficiency of the processor. The lowest dimension is less than the count of the operation units. The step S121 includes: determining the first dimension according to the lowest dimension and the count of the operation units, where the first dimension needs to satisfy the following conditions: the first dimension is greater than or equal to the lowest dimension, and the count of the operation units is a multiple of the first dimension, that is, the second dimension is a divisor of the count of the operation units.

For example, it is assumed that the count of the operation units is 16, the example of the above image is used as an example for illustration, the lowest dimension of the input data is 3, then the first dimension may be 4, or the first dimension may also be 8.

The step S122 may further include: after the first dimension is determined, determining the second dimension according to the first dimension, the count of the operation units, and the second lowest dimension, where the second dimension needs to satisfy the following conditions: the second dimension is greater than or equal to the second lowest dimension, and the product of the second dimension and the first dimension is a multiple of the count of the operation units.

The following still uses the above example for exemplary description. The count of the operation units is 16, the lowest dimension is 3, and the second lowest dimension is 7, if the determined first dimension is 4, the second dimension may be 8 or 12, and the like.

It should be noted that the first data dimension and the second data dimension may not be the lowest dimension nor the second lowest dimension. For example, if the count of the operation units is 16, for the above (3 × 7 × 9) input data, the determined first data dimension and the determined second data dimension may also be 7 and 9, and the determined first dimension and the determined second dimension may be 8 and 10, or 16 and 9, respectively.

For the step S131, if the first dimension is equal to the lowest dimension, no completion processing is required to be performed in the lowest dimension direction; similarly, if the second dimension is equal to the second lowest dimension, no completion processing is required to be performed in the second lowest dimension. When performing an operation, the input data in the lowest dimension is sequentially taken along the direction of the second lowest dimension and input into the operation units.

For example, it is assumed that the count of the operation units is 9, the input data of the above image is used as an example for illustration. If the lowest dimension of the input data is 3 and the second lowest dimension is 7, then the first dimension may be 3, and the second dimension may be 9. In the direction of the lowest dimension, no completion processing is required to be performed, and the input data may be complemented by 0 until the dimension number of the second lowest dimension becomes 9. The completed input data may include 3 groups of data as shown in the following table 2:

**Table 2 completed R (G or B) values**

| 1 | 2 | 3 | 4 | 5 | 6 | 7 | 0 | 0 |
|---|---|---|---|---|---|---|---|---|
| 8 | 9 | ... | .. | ... | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| ... | | | | | | ... | 0 | 0 |
| 13 | 15 | 17 | 19 | ... | ... | ... | 0 | 0 |

When performing an operation, a group of data (1,1,1,2,2,2,3,3,3) is taken in sequence and input into 9 operation units for operation, and then a group of data (4,4,4,5,5,5,6,6,6) is taken and input to 9 operation units for operation, and then a group of data (7,7,7,0,0,0,0,0,0) is taken and input to 9 operation units for operation.

If the operation is performed by using the prior art, 7 operations are needed to complete the operation of the first row of data. While if the operation is performed by using the input data processing method provided by the present disclosure, only 3 operations are needed to complete the operation of the first row of data, which can reduce the original 7 dimensions to 3 dimensions, and increase the operation efficiency by more than 2 times.

According to the above analysis, it can be known that the input data processing method provided by the present disclosure may improve the operation performance of the operation units, and improves the processing efficiency of the processor.

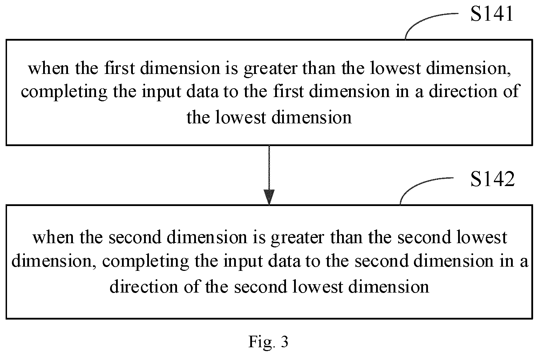

Fig. 3 is a flowchart of a step S131 of an input data processing method according to an embodiment of the present disclosure. As shown in Fig. 3, the step S131 further includes:
step S141: when the first dimension is greater than the lowest dimension, completing the input data to the first dimension in a direction of the lowest dimension; and
step S142: when the second dimension is greater than the second lowest dimension, completing the input data to the second dimension in a direction of the second lowest dimension.

In a possible embodiment, the data used for completing may be 0.

The following still uses the example of the above-mentioned image for exemplary description. It is assumed that the determined first dimension is 4, and the determined second dimension is 8, then the first dimension is greater than the lowest dimension 3, and the input data is complemented to the first dimension in the direction of the lowest dimension. The input data processed after step S141 includes: 3 groups of data as shown in Table 1 and 1 group of all-zero matrix (9 × 7) (9 rows and 7 columns). The second dimension is greater than the second lowest dimension 7, and the input data is complemented to the second dimension in the direction of the second lowest dimension. The input data processed after step S142 includes: 3 groups of data as shown in Table 3 and 1 group of all-zero matrix (9 × 8).

**Table 3 completed R (G or B) values after step S142**

| 1 | 2 | 3 | 4 | 5 | 6 | 7 | 0 |
|---|---|---|---|---|---|---|---|
| 8 | 9 | ... | .. | ... | | ... | 0 |
| ... | | | | | | ... | 0 |
| ... | | | | | | ... | 0 |
| ... | | | | | | ... | 0 |
| ... | | | | | | ... | 0 |
| ... | | | | | | ... | 0 |
| ... | | | | | | ... | 0 |
| 13 | 15 | 17 | 19 | ... | ... | ... | 0 |

It should be noted that the above-mentioned description of examples is also applicable to the example that the first data dimension is a dimension where the input data is read and written firstly, and the second data dimension is a dimension where the input data is read and written secondly. The specific process is similar, which is not described in detail in this disclosure.

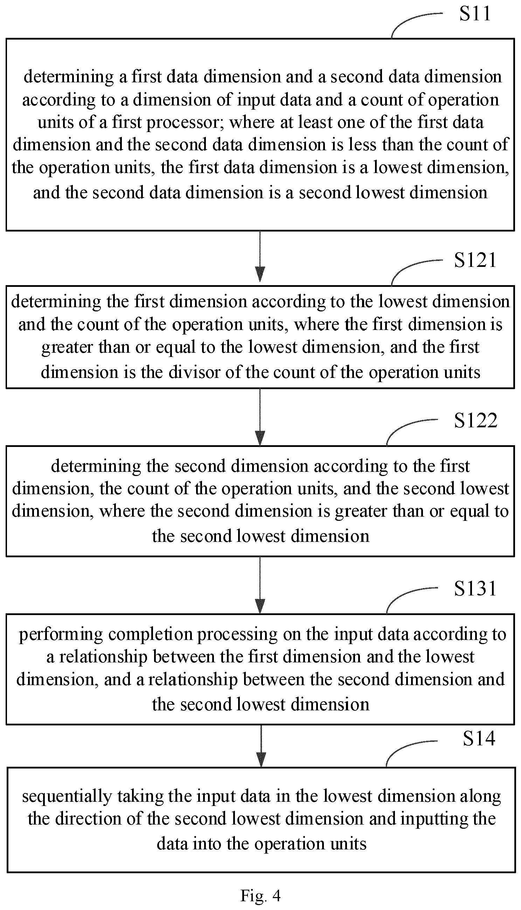

Fig. 4 is another flowchart of an input data processing method according to an embodiment of the present disclosure. As shown in Fig. 4, the input data processing method in the embodiment of the present disclosure further includes:
step S14: sequentially taking the input data in the lowest dimension along the direction of the second lowest dimension and inputting the data into the operation units; or sequentially taking the input data in the dimension where the input data is read and written firstly (referred to as the first direction) along the dimension where the input data is read and written secondly (referred to as the second direction) and inputting the data into the operation units, that is, sequentially taking the input data in the first direction along the second direction and inputting the data into the operation units. For example, in the NHWC format, the input data in the C-dimension direction is sequentially taken along the W-dimension direction and input into the operation units. The specific process is illustrated in the following examples.

The specific process has been described in the example of the step S13, and the following uses the input data of"3 groups of data as shown in Table 3 and 1 group of all-zero matrix (9 × 8)" as an example for further illustration.

When performing an operation, a group of data (1,1,1,0,2,2,2,0,3,3,3,0,4,4,4,0) is taken in sequence and input into 16 operation units for operation, and then a group of data (5,5,5,0,6,6,6,0,7,7,7,0,0,0,0,0) is taken and input to 16 operation units for operation.

If the operation is performed by using the prior art, 7 operations are needed to complete the operation of the first row of data. While if the operation is performed by using the input data processing method provided by the present disclosure, only 2 operations are needed to complete the operation of the first row of data, which can reduce the original 7 dimensions to 2 dimensions, and increase the operation efficiency by more than 3 times.

In a possible embodiment, the first dimension may be a smallest divisor that is greater than or equal to the lowest dimension among the divisors of the count of the operation units. For example, as shown in the above-mentioned example, the first dimension may be 4 or 8, and the first dimension is determined to be 4, and then a smaller count of 0s can be used for the completion processing, which may maximize the operation performance. The following is a comparison of the cases where the first dimension is 4 and the first dimension is 8.

The case where the first dimension is 4 has been described above. When the first dimension is 8, and the second dimension is 8, the completed input data is: 3 groups of data as shown in Table 3 and 5 groups of all-zero matrix (9 × 8).

When performing operations, a group of data (1,1,1,0,0,0,0,0,2,2,2,0,0,0,0,0) is taken in sequence and input into 16 operation units for operating and then a group of data (3,3,3,0,0,0,0,0,4,4,4,0,0,0,0,0) is taken and input to 16 operation units for operation, and then a group of data (7,7,7,0,0,0,0,0,0,0,0,0,0,0,0,0) is taken and input to 16 operation units for operation.

If the operation is performed by using the prior art, 7 operations are needed to complete the operation of the first row of data. While if the operation is performed by using the input data processing method provided by the present disclosure, and when the first dimension is 8, only 4 operations are needed to complete the operations of the first row of data, which can reduce the original 7 dimensions to 4 dimensions, and increase the operation efficiency by nearly 2 times. Compared with the prior art, by adopting the input data processing method provided by the present disclosure, when the first dimension is 8, the method may significantly improve the operation performance. When the first dimension is 4, the improvement of the operation efficiency is more obvious.

In a possible embodiment, the second dimension is greater than or equal to the second lowest dimension, and the product of the second dimension and the first dimension may be a smallest multiple of the count of the operation units.

For the specific process, please refer to the description about the first dimension, which will not be described again.

Determining the first dimension and the second dimension as the minimum data satisfying the above conditions can maximize the operation performance of the operation units and improve the processing efficiency of the processor.

It should be noted that the data of the images adopted in the present disclosure is only an example of the disclosure, which does not limit the present disclosure in any way. The input data with small dimensions in the above example is given merely for the purpose of illustration, while the second lowest dimension is usually large in practical applications. After the input data is processed using the input data processing method provided by the embodiments of the present disclosure, the operation performance of operation units may be improved more significantly.

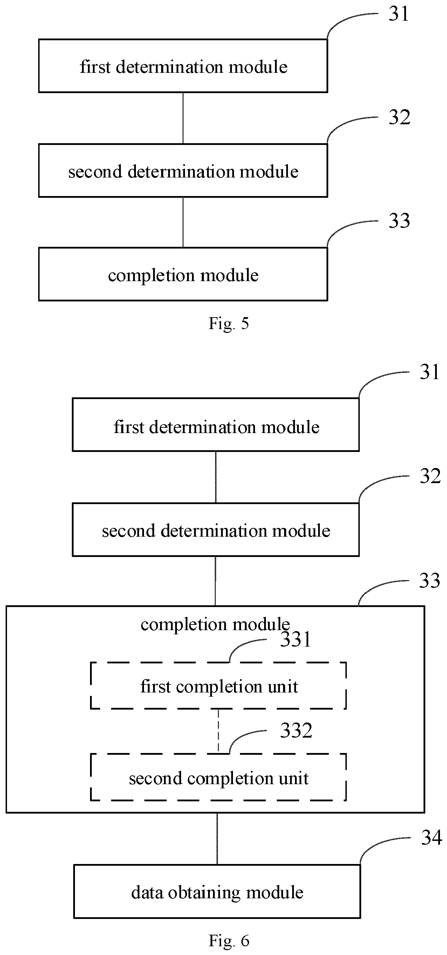

Fig. 5 is a block diagram of an input data processing apparatus according to an embodiment of the present disclosure. The apparatus may be applied to a processor.

As shown in Fig. 5, the data processing apparatus may include:
a first determination module 31 configured to determine a first data dimension and a second data dimension according to a dimension of the input data and a count of operation units of a first processor, where at least one of the first data dimension and the second data dimension is less than the count of the operation units;
a second determination module 32 configured determine a first dimension and a second dimension according to the first data dimension, the second data dimension, and the count of the operation units, where a product of the first dimension and the second dimension is a multiple of the count of the operation units, and the one of the first dimension and the second dimension which is smaller than the count of the operation units is a divisor of the count of the operation units; and
a completion module 33 configured to perform completion processing on the input data according to the first dimension, the second dimension, the first data dimension, and the second data dimension.

In this way, a data dimension that is smaller than the count of the operation units of the first processor among the dimensions of the input data is determined, and the dimension (the first dimension or the second dimension) to which the input data needs to be completed according to the determined data dimension and the count of the operation units is further determined; and then completion processing is performed on the input data according to the first dimension, the second dimension, the first data dimension, and the second data dimension. When inputting input data to the operation units, data can be taken from the input data according to the first dimension and the second dimension, which is equivalent to performing dimensionality reduction on the input data. The apparatus may improve the operation performance of the operation units and the processing efficiency of the processor.

Fig. 6 is another block diagram of an input data processing apparatus according to an embodiment of the present disclosure. As shown in Fig. 6, in a possible embodiment, the completion module 33 may include:
a first completion unit 331 configured to complete input data to the first dimension in a direction of the lowest dimension when the first dimension is greater than the lowest dimension; and
a second completion unit 332 configured to complete input data to the second dimension in a direction of the second lowest dimension when the second dimension is greater than the second lowest dimension.

In a possible embodiment, the data processing apparatus further includes:
a data obtaining module 34 configured to sequentially take the input data in the lowest dimension along the direction of the second lowest dimension and input the data into the operation units.

In a possible embodiment, the second determination is further configured to determine the first dimension according to a smaller one of the first data dimension and the second data dimension, and the count of the operation units, where the first dimension is a divisor of the count of the operation units, and the first dimension is greater than or equal to the smaller one of the first data dimension and the second data dimension; the second determination is further configured to determine the second dimension according to a larger one of the first data dimension and the second data dimension, and the first dimension and the count of the operation units, where the second dimension is greater than or equal to the larger one of the first data dimension and the second data dimension.

In a possible embodiment, the first data dimension is a lowest dimension among the dimensions of the input data, and the second data dimension is a second lowest dimension among the dimensions of the input data, where the second lowest dimension is a dimension that is only higher than the lowest dimension.

In a possible embodiment, the second determination module is further configured to determine the first dimension according to the lowest dimension and the count of the operation units, where the first dimension is greater than or equal to the lowest dimension, and the first dimension is the divisor of the count of the operation units; the second determination module is further configured to determine the second dimension according to the first dimension, the count of the operation units, and the second lowest dimension, where the second dimension is greater than or equal to the second lowest dimension.

In a possible embodiment, the completion module is further configured to perform completion processing on the input data according to a relationship between the first dimension and the lowest dimension, and a relationship between the second dimension and the second lowest dimension.

In a possible embodiment, the first dimension is a smallest divisor of the count of the operation units, where the smallest divisor is greater than or equal to the lowest dimension.

In a possible embodiment, the second dimension is greater than or equal to the second lowest dimension, and a product of the second dimension and the first dimension is a smallest multiple of the count of the operation units.

In a possible embodiment, the input data is image data.

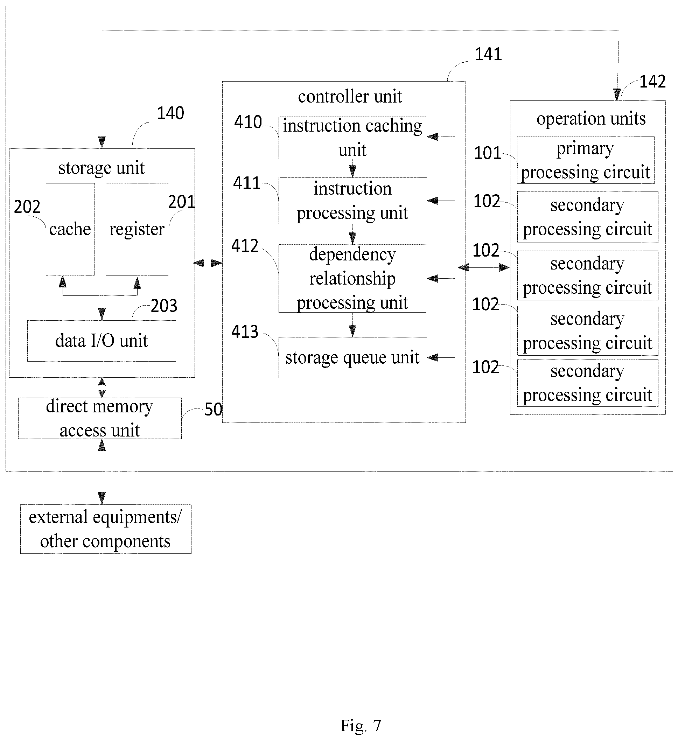

Fig. 7 illustrates a block diagram of a first processor according to an embodiment of the present disclosure.

As shown in Fig. 7, the first processor is configured to perform machine learning computation. The first processor includes a controller unit 141 and an operation unit 142, where the controller unit 141 is connected to the operation unit 142. The first processor may include a plurality of operation units 142, and the plurality of operation units 142 may include a primary processing circuit and a plurality of secondary processing circuits.

The controller unit 141 is configured to obtain input data and computation instructions. The input data may be data that has been completed by the first processor.

In an optional solution, a primary processing circuit and a plurality of secondary processing circuits may be in a tree structure, an H-type structure, or a pulse array machine structure. The present disclosure does not limit the connection method between the primary processing circuit and the secondary processing circuits.

In an optional solution, a method of obtaining input data and computation instructions may include: obtaining input data and computation instructions through a data input/output unit, and the data input/output unit may be one or more data I/O interfaces or I/O pins.

The computation instructions include, but are not limited to, forward operation instructions or backward training instructions, or other neural network operation instructions, such as convolution operation instructions. The detailed embodiments of the present disclosure does not limit the specific expressions of the computation instructions.

The controller unit 141 is further configured to parse the computation instructions to obtain a plurality of operation instructions, and send the plurality of operation instructions and the input data to the primary processing circuit.

A primary processing circuit 101 is configured to preprocess on the input data and transmit data and operation instructions with the plurality of secondary processing circuits.

A plurality of secondary processing circuits 102 are configured to perform intermediate operations in parallel according to data and operation instructions transmitted from the primary processing circuit to obtain a plurality of intermediate results, and transmit the plurality of intermediate results to the primary processing circuit.

The primary processing circuit 101 is further configured to perform subsequent processing on the plurality of intermediate results to obtain computation results of the computation instructions.

The technical solution provided by the present disclosure sets the operation units with a primary circuit-a plurality of secondary circuits structure. Data can be split according to the computation instructions of the forward operation, so that a plurality of secondary processing circuits can perform parallel operations on the part with a large amount of computation, thereby speeding up the operation, saving the operation time, and reducing the power consumption.

Optionally, the machine learning computation may specifically include artificial neural network operations; the input data may specifically include input neuron data and weight data; and the computation result may specifically be a result of an artificial neural network operation, that is, output neuron data.

The operation of the neural network may be an operation in one layer of the neural network. The implementation process of a multi-layer neural network is: during a forward operation, when an execution of the previous layer of the artificial neural network is completed, the operation instruction of the next layer may compute an output neuron computed by the operation unit as an input neuron of the next layer (or perform some operations on the output neuron, and then take the output neuron as the input neuron of the next layer), and at the same time, the weight is also replaced with the weight of the next layer; during a backward operation, when the backward operation of the previous layer of the artificial neural network is completed, the operation instruction of the next layer may compute an input neuron gradient computed by the operation unit as an output neuron gradient of the next layer (or perform some operations on the input neuron gradient, and then take the input neuron gradient as the output neuron gradient of the next layer), and replace the weight with the weight of the next layer.

The machine learning computation may also include a support vector machine operation, a k-nearest neighbor (k-nn) operation, a k-means operation, a principal component analysis operation, and the like. For the convenience of description, an embodiment of an artificial neural network operation is provided below to illustrate the specific scheme of machine learning computation.

For the artificial neural network operation, if the artificial neural network operation has multi-layer operations, the input neurons and the output neurons of the multi-layer operations do not refer to the neurons in the input layers and the neurons in the output layers of the entire neural network. For any two adjacent layers in the network, the neurons in the lower layer of the network forward operation are the input neurons, and the neurons in the upper layer of the network forward operation are the output neurons. Taking a convolutional neural network as an example, it is assumed that a convolutional neural network has *L* layers where *K* = 1,2,...,*L*-1. For the K^{th} and K+1^{th} layers, the K^{th} layer is taken as an input layer, the neurons in this layer are the input neurons; and the K+1^{th} layer is taken as the output layer, the neurons in this layer are the output neurons. That is, except for the top layer, each layer may be taken as an input layer, and the next layer is the corresponding output layer.

Optionally, the first processor may further include a storage unit 140 and a direct memory access unit 50. The storage unit 140 may include one or any combination of a register and a cache. Specifically, the cache is configured to store the computation instructions; the register is configured to store the input data and a scalar; and the cache is a high-speed temporary cache. The direct memory access unit 50 is configured to read or store data from the storage unit 10.

Optionally, the controller unit includes: an instruction storage unit 410, an instruction processing unit 411, and a storage queue unit 413.

The instruction storage unit 410 is configured to store computation instructions associated with artificial neural network operations.

The instruction processing unit 411 is configured to parse the computation instructions to obtain a plurality of operation instructions.

The storage queue unit 413 is configured to store an instruction queue, where the instruction queue includes a plurality of operation instructions or computation instructions to be executed according to a sequence of the queue.

For example, in an optional technical solution, a primary operation processing circuit may also include a controller unit, where the controller unit may include a primary instruction processing unit which is specifically configured to decode instructions into micro instructions. In another optional solution, a secondary operation processing circuit may also include another controller unit, where the controller unit may include a secondary instruction processing unit, which is specifically configured to receive and process the micro instructions. The micro instructions may be instructions of the next level lower than the instructions. The micro instructions may be obtained by splitting or decoding the instructions, and may be further decoded into control signals of each component, each unit, or each processing circuit.

In an optional solution, the structure of the computation instruction may be shown in the following table.

| | | | |
|---|---|---|---|
| operation code | register or immediate operand | register/immediate operand | |

The ellipsis in the above table indicates that a plurality of registers or immediate operand can be included.

In another optional solution, the computation instructions may include: one or more operation fields and an operation code. The computation instructions may include neural network operation instructions. Taking the neural network operation instructions as an example, as shown in Table 1, the register number 0, the register number 1, the register number 2, the register number 3, and the register number 4 may be operation fields, where each of the register number 0, the register number 1, the register number 2, the register number 3, and the register number 4 may be the number of one or more registers.

| Operation code | Register number 0 | Register number 1 | Register number 2 | Register number 3 | Register number 4 |
|---|---|---|---|---|---|
| COMPUTE | initial address of input data | length of input data | initial address of weight | length of weight | address of activation function interpolation table |
| IO | external memory address of data | length of data | internal memory address of data | | |
| NOP | | | | | |
| JUMP | target address | | | | |
| MOVE | input address | data size | output address | | |

The register may be an off-chip memory, and may also be an on-chip memory in practical applications, and may be configured to store the data. The data may be n-dimensional data, in which n may be an integer greater than or equal to 1. For example, if n=1, the data is 1-dimensional data, that is, a vector; if n=2, the data is 2-dimensional data, that is, a matrix; and if n≥3, the data is a multidimensional tensor.

Optionally, the controller unit further includes:
a dependency relationship processing unit 412 configured to, if there are multiple operation instructions, determine whether a first operation instruction forms an associated relationship with a zeroth operation instruction before the first operation instruction or not. If the first operation instruction forms the associated relationship with the zeroth operation instruction, the dependency relationship processing unit caches the first operation instruction in the instruction caching unit, After the zeroth operation instruction is performed, the dependency relationship processing unit fetches the first operation instruction from the instruction caching unit and transmits the first operation instruction to the operation units.

Whether the first operation instruction forms the associated relationship with the zeroth operation instruction before the first operation instruction or not is determined as follows.

A first storage address interval of required data (for example, a matrix) in the first operation instruction is fetched according to the first operation instruction, and a zeroth storage address interval of the required matrix in the zeroth operation instruction is fetched according to the zeroth operation instruction. If an overlapped region exists between the first storage address interval and the zeroth storage address interval, it is determined that the first operation instruction forms the associated relationship with the zeroth operation instruction; and if no overlapped region exists between the first storage address interval and the zeroth storage address interval, it is determined that the first operation instruction does not form the associated relationship with the zeroth operation instruction.

The present disclosure may be a system, a method, and/or a computer program product. The computer program product may include a computer-readable storage medium, which stores computer-readable program instructions for enabling the processor to implement the aspects of the disclosure.

The computer-readable storage medium may be a physical device that can store instructions used by instruction execution devices. The computer-readable storage medium may be, but are not limited to, an electric storage device, a magnetic storage device, an optical storage device, an electromagnetic storage device, a semiconductor storage device, or any suitable combination of the electric storage device, the magnetic storage device, the optical storage device, the electromagnetic storage device, and the semiconductor storage device. More specific examples (non-exhaustive) of the computer-readable storage medium include: a portable computer disk, a hard disk, an RAM (random access memory), an ROM (read-only memory), an EPROM (erasable programmable read-only memory) or a flash memory, an SRAM (static random access memory), a portable CD-ROM (compact disc read-only memory), a DVD (digital versatile disc), a memory stick, a floppy disk, a mechanical encoding device, a punched card or a raised structure in the groove with instructions stored thereon, and any suitable combination of the above devices. The computer-readable storage medium described in the present disclosure is not to be interpreted as transient signals, such as radio waves or other freely propagating electromagnetic waves, electromagnetic waves propagating through waveguides or other transmission media (for example, optical pulses through fiber optic cables), or electrical signals transmitted through wires.

The computer-readable program instructions may be downloaded from a computer-readable storage medium to various computing/processing devices, or downloaded to an external computers or external storage devices over a network, such as the Internet, a local area network, a wide area network, and/or a wireless network. The network may include copper transmission cables, fiber optic transmission, wireless transmission, routers, firewalls, switches, gateway computers, and/or edge servers. A network adapter or a network interface in each computing/processing device receives the computer-readable program instructions from the network and forwards the computer-readable program instructions, which are stored in a computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, where the programming languages include object-oriented programming languages, such as Smalltalk, C ++, and the like, as well as conventional procedural programming languages, such as the "C" language or similar programming languages. The computer-readable program instructions may be executed entirely on users' computers, executed partly on users' computers, executed as a separate software package, executed partly on users' computers while partly on remote computers, or executed entirely on remote computers or servers. The remote computers can be connected to the users' computers through any kind of network, including a local area network (LAN) or a wide area network (WAN), or the remote computers can be connected to external computers (for example, connected to external computers through the Internet by an Internet service provider). In some embodiments, the electronic circuit is personalized by using the state information of the computer-readable program instructions, such as a programmable logic circuit, a field programmable gate array (FPGA), or a programmable logic array (PLA), the electronic can execute the computer-readable program instructions to implement various aspects of the present disclosure.

The various aspects of the present disclosure are described with reference to the flowcharts and/or block diagrams of the methods, the apparatus (systems) and the computer program products according to the embodiments of the present disclosure. It should be understood that each block of the flowcharts and/or block diagrams, and combinations of blocks in the flowcharts and/or block diagrams, can be implemented by the computer-readable program instructions.

The computer-readable program instructions can be provided to processors of general-purpose computers, special-purpose computers, or other programmable data processing devices, so that a machine can be made, which enables the instructions, when executed by processors of computers or other programmable data processing devices, to produce a device that implements the functions/actions specified in one or more blocks in the flowcharts and/or block diagrams. The computer-readable program instructions may also be stored in a computer-readable storage medium, and the instructions make the computers, the programmable data processing devices, and/or other devices work in a specific manner. Therefore, a computer-readable medium storing instructions includes a kind of manufactured goods including instructions to implement various aspects of the functions/actions specified in one or more blocks in the flowcharts and/or block diagrams.

The computer-readable program instructions can also be loaded onto a computers, other programmable data processing devices, or other devices, so that a series of operation steps can be performed on the computers, other programmable data processing devices, or other devices to implement operations of computers, therefore, the instructions executed on the computers, other programmable data processing devices, or other devices can implement the functions/actions specified in one or more blocks in the flowcharts and/or block diagrams.

The flowcharts and block diagrams in the drawings illustrate architectures, functions, and operations implemented according to the systems, methods and computer program products of various embodiments of the present disclosure. In this way, each block in the flowcharts or block diagrams may represent a module, a program segment, or part of an instruction, where the module, the program segment, or the part of an instruction may contain one or more executable instructions for implementing specified logical functions. In some alternative implementations, the functions marked in the blocks may also occur in a different order than the order marked in the drawings. For example, two consecutive blocks may be executed substantially in parallel, or may be executed in a reverse order, which depends on the involved functions. It should also be noted that each block in the block diagrams and/or flowcharts, and combinations of blocks in the block diagrams and/or flowcharts, can be implemented in a dedicated hardware-based system that performs the specified functions or actions, or be implemented with a combination of dedicated hardware and computer instructions.

The embodiments of the present disclosure have been described above. The above description is exemplary, not exhaustive.

The choice of terms used in the present disclosure is intended to best explain the principle and practical application, or improvement of technologies in market of each embodiment, or to enable those skilled in the art to understand the embodiments disclosed in the present disclosure.

## Claims

1. An input data processing method, which is implemented by a processor, comprising:
determining a first data dimension and a second data dimension according to a dimension of input data and a count of operation units of a first processor, where the first data dimension is less than the count of the operation units;
determining a first dimension and a second dimension according to the first data dimension, the second data dimension, and the count of the operation units, where a product of the first dimension and the second dimension is a multiple of the count of the operation units, and the first dimension is a divisor of the count of the operation units, wherein the first dimension is greater than or equal to the first data dimension and the second dimension is greater than or equal to the second data dimension; and
performing completion processing on the input data according to the first dimension, the second dimension, the first data dimension, and the second data dimension, including:
when the first dimension is larger than the first data dimension, completing the input data to the first dimension in the direction of the first data dimension, wherein the input data along the first data dimension are complemented by 0 until a dimension number along the first data dimension reaches the first dimension,
and when the second dimension is larger than the second data dimension, completing the input data to the second dimension in the direction of the second data dimension, wherein the input data along the second data dimension is complemented by 0 until a dimension number along the second data dimension reaches the second dimension,
thereby the completed input data contains M × N dimensions, wherein M represents the first dimension, and N represents the second dimension;
performing operation on the completed input data, wherein a first group of C data are taken and input into C operation units respectively for operation, wherein C represents the count of operation units, and then a second group of C data are taken and input into C operation units respectively for operation, until all the R groups of data have been processed, wherein R=M^{∗}N/C, wherein the completed input data are divided into R groups by dividing along the second dimension into R parts.

2. The input data processing method of claim 1, wherein the determining the first dimension and the second dimension according to the first data dimension, the second data dimension, and the count of the operation units includes:
determining the first dimension according to a smaller one of the first data dimension and the second data dimension, and the count of the operation units, where the first dimension is a divisor of the count of the operation units, and the first dimension is greater than or equal to the smaller one of the first data dimension and the second data dimension, and
determining the second dimension according to a larger one of the first data dimension and the second data dimension, and the count of the operation units, where the second dimension is greater than or equal to the larger one of the first data dimension and the second data dimension.

3. The input data processing method of claim 1 or claim 2, wherein the first data dimension is a lowest dimension among dimensions of the input data, and the second data dimension is a second lowest dimension among the dimensions of the input data, wherein the second lowest dimension is a dimension that is only higher than the lowest dimension;
the determining the first dimension and the second dimension according to the first data dimension, the second data dimension, and the count of the operation units includes:
determining the first dimension according to the lowest dimension and the count of the operation units, wherein the first dimension is greater than or equal to the lowest dimension, and the first dimension is the divisor of the count of the operation units, and
determining the second dimension according to the first dimension, the count of the operation units, and the second lowest dimension, wherein the second dimension is greater than or equal to the second lowest dimension.

4. The input data processing method of claim 3, wherein the performing completion processing on the input data according to the first dimension, the second dimension, the first data dimension, and the second data dimension includes:
performing completion processing on the input data according to a relationship between the first dimension and the lowest dimension, and a relationship between the second dimension and the second lowest dimension.

5. The input data processing method of claim 3 or claim 4, wherein the first dimension is a smallest divisor of the count of the operation units, wherein the smallest divisor is greater than or equal to the lowest dimension; and
the second dimension is greater than or equal to the second lowest dimension, and the product of the second dimension and the first dimension is a smallest multiple of the count of the operation units.

6. The input data processing method of claim 5, wherein the performing completion processing on the input data according to the relationship between the first dimension and the lowest dimension, and the relationship between the second dimension and the second lowest dimension includes:
when the first dimension is greater than the lowest dimension, completing the input data to the first dimension in a direction of the lowest dimension, and
when the second dimension is greater than the second lowest dimension, completing the input data to the second dimension in a direction of the second lowest dimension.

7. The input data processing method of any one of claims 1-6, further comprising:
when the first data dimension of the input data is smaller than the count of the operation units of the first processor, determining the first dimension and the second dimension according to the first data dimension and the second data dimension of the input data, and the count of the operation units, wherein the first dimension is the divisor of the count of the operation units, and the first dimension is greater than or equal to a dimension number of the first data dimension, the product of the first dimension and the second dimension is the multiple of the count of the operation units, and the second dimension is greater than or equal to a dimension number of the second data dimension, and
performing completion processing on the input data according to the first dimension, the second dimension, the first data dimension, and the second data dimension,
wherein the first data dimension is a dimension where the input data is read and written firstly, and the second data dimension is a dimension where the input data is read and written secondly.

8. An input data processing apparatus, comprising means for carrying out the method of any of claims 1 to 7.

9. A non-volatile computer-readable storage medium comprising instructions which, when executed by a computer, cause the computer to carry out the method of any one of claims 1 to 7.

## Patentansprüche

1. Eingabedatenverarbeitungsverfahren, das durch einen Prozessor implementiert wird, umfassend:
Bestimmen einer ersten Datendimension und einer zweiten Datendimension gemäß einer Dimension von Eingabedaten und einer Anzahl an Operationseinheiten eines ersten Prozessors, wobei die erste Datendimension kleiner als die Anzahl der Operationseinheiten ist;
Bestimmen einer ersten Dimension und einer zweiten Dimension gemäß der ersten Datendimension, der zweiten Datendimension und der Anzahl der Operationseinheiten, wobei ein Produkt der ersten Dimension und der zweiten Dimension ein Vielfaches der Anzahl der Operationseinheiten ist, und die erste Dimension ein Divisor der Anzahl der Operationseinheiten ist, wobei die erste Dimension größer als die oder gleich der ersten Datendimension ist und die zweite Dimension größer als die oder gleich der zweiten Datendimension ist; und
Durchführen von Vervollständigungsverarbeitung an den Eingabedaten gemäß der ersten Dimension, der zweiten Dimension, der ersten Datendimension und der zweiten Datendimension, beinhaltend:
wenn die erste Dimension größer als die erste Datendimension ist, Vervollständigen der Eingabedaten zu der ersten Dimension in der Richtung der ersten Datendimension, wobei die Eingabedaten entlang der ersten Datendimension durch 0 vervollständigt werden, bis eine Dimensionszahl entlang der ersten Datendimension die erste Dimension erreicht,
und wenn die zweite Dimension größer als die zweite Datendimension ist, Vervollständigen der Eingabedaten zu der zweiten Dimension in der Richtung der zweiten Datendimension, wobei die Eingabedaten entlang der zweiten Datendimension durch 0 vervollständigt werden, bis eine Dimensionszahl entlang der zweiten Datendimension die zweite Dimension erreicht,
dadurch enthalten die vervollständigten Eingabedaten M × N Dimensionen, wobei M die erste Dimension darstellt und N die zweite Dimension darstellt;
Durchführen einer Operation an den vervollständigten Eingabedaten, wobei eine erste Gruppe von C Daten genommen und in C Operationseinheiten jeweils zur Operation eingegeben werden, wobei C die Anzahl an Operationseinheiten darstellt, und dann eine zweite Gruppe von C Daten genommen und in C Operationseinheiten jeweils zur Operation eingegeben werden, bis alle der R Gruppen von Daten verarbeitet worden sind, wobei R=M^{∗}N/C, wobei die vervollständigten Eingabedaten in R Gruppen geteilt werden, indem entlang der zweiten Dimension in R Teile geteilt wird.

2. Eingabedatenverarbeitungsverfahren nach Anspruch 1, wobei das Bestimmen der ersten Dimension und der zweiten Dimension gemäß der ersten Datendimension, der zweiten Datendimension und der Anzahl der Operationseinheiten Folgendes beinhaltet:
Bestimmen der ersten Dimension gemäß einer kleineren von der ersten Datendimension und der zweiten Datendimension und der Anzahl der Operationseinheiten, wobei die erste Dimension ein Divisor der Anzahl der Operationseinheiten ist und die erste Dimension größer als die oder gleich der kleineren von der ersten Datendimension und der zweiten Datendimension ist, und
Bestimmen der zweiten Dimension gemäß einer größeren von der ersten Datendimension und der zweiten Datendimension und der Anzahl der Operationseinheiten, wobei die zweite Dimension größer als oder gleich der größeren von der ersten Datendimension und der zweiten Datendimension ist.

3. Eingabedatenverarbeitungsverfahren nach Anspruch 1 oder Anspruch 2, wobei die erste Datendimension eine niedrigste Dimension unter Dimensionen der Eingabedaten ist und die zweite Datendimension eine zweitniedrigste Dimension unter den Dimensionen der Eingabedaten ist, wobei die zweitniedrigste Dimension eine Dimension ist, die nur höher als die niedrigste Dimension ist;
wobei das Bestimmen der ersten Dimension und der zweiten Dimension gemäß der ersten Datendimension, der zweiten Datendimension und der Anzahl der Operationseinheiten Folgendes beinhaltet:
Bestimmen der ersten Dimension gemäß der niedrigsten Dimension und der Anzahl der Operationseinheiten, wobei die erste Dimension größer als oder gleich der niedrigsten Dimension ist und die erste Dimension der Divisor der Anzahl der Operationseinheiten ist, und
Bestimmen der zweiten Dimension gemäß der ersten Dimension, der Anzahl der Operationseinheiten und der zweitniedrigsten Dimension, wobei die zweite Dimension größer als die oder gleich der zweitniedrigsten Dimension ist.

4. Eingabedatenverarbeitungsverfahren nach Anspruch 3, wobei das Durchführen von Vervollständigungsverarbeitung an den Eingabedaten gemäß der ersten Dimension, der zweiten Dimension, der ersten Datendimension und der zweiten Datendimension Folgendes beinhaltet:
Durchführen von Vervollständigungsverarbeitung an den Eingabedaten gemäß einer Beziehung zwischen der ersten Dimension und der niedrigsten Dimension und einer Beziehung zwischen der zweiten Dimension und der zweitniedrigsten Dimension.

5. Eingabedatenverarbeitungsverfahren nach Anspruch 3 oder Anspruch 4, wobei die erste Dimension ein kleinster Divisor der Anzahl der Operationseinheiten ist, wobei der kleinste Divisor größer als oder gleich der niedrigsten Dimension ist; und
die zweite Dimension größer als oder gleich der zweitniedrigsten Dimension ist, und das Produkt der zweiten Dimension und der ersten Dimension ein kleinstes Vielfaches der Anzahl der Operationseinheiten ist.

6. Eingabedatenverarbeitungsverfahren nach Anspruch 5, wobei das Durchführen von Vervollständigungsverarbeitung an den Eingabedaten gemäß der Beziehung zwischen der ersten Dimension und der niedrigsten Dimension und der Beziehung zwischen der zweiten Dimension und der zweitniedrigsten Dimension Folgendes beinhaltet:
wenn die erste Dimension größer als die niedrigste Dimension ist, Vervollständigen der Eingabedaten zu der ersten Dimension in einer Richtung der niedrigsten Dimension, und
wenn die zweite Dimension größer als die zweitniedrigste Dimension ist, Vervollständigen der Eingabedaten zu der zweiten Dimension in einer Richtung der zweitniedrigsten Dimension.

7. Eingabedatenverarbeitungsverfahren nach einem der Ansprüche 1-6, ferner umfassend:
wenn die erste Datendimension der Eingabedaten kleiner als die Anzahl der Operationseinheiten des ersten Prozessors ist, Bestimmen der ersten Dimension und der zweiten Dimension gemäß der ersten Datendimension und der zweiten Datendimension der Eingabedaten und der Anzahl der Operationseinheiten, wobei die erste Dimension der Divisor der Anzahl der Operationseinheiten ist und die erste Dimension größer als eine oder gleich einer Dimensionszahl der ersten Datendimension ist, das Produkt der ersten Dimension und der zweiten Dimension das Vielfache der Anzahl der Operationseinheiten ist, und die zweite Dimension größer als eine oder gleich einer Dimensionszahl der zweiten Datendimension ist, und
Durchführen von Vervollständigungsverarbeitung an den Eingabedaten gemäß der ersten Dimension, der zweiten Dimension, der ersten Datendimension und der zweiten Datendimension,
wobei die erste Datendimension eine Dimension ist, in der die Eingabedaten als erstes gelesen und geschrieben werden, und die zweite Datendimension eine Dimension ist, in der die Eingabedaten als zweites gelesen und geschrieben werden.

8. Eingabedatenverarbeitungsvorrichtung, umfassend Mittel zum Durchführen des Verfahrens nach einem der Ansprüche 1 bis 7.

9. Nichtflüchtiges computerlesbares Speichermedium, das Anweisungen umfasst, die, wenn sie durch einem Computer ausgeführt werden, den Computer veranlassen, das Verfahren nach einem der Ansprüche 1 bis 7 durchzuführen.

## Revendications

1. Procédé de traitement de données d'entrée, qui est mis en œuvre par un processeur, comprenant :
la détermination d'une première dimension de données et d'une seconde dimension de données selon une dimension de données d'entrée et un nombre d'unités de fonctionnement d'un premier processeur, où la première dimension de données est inférieure au nombre d'unités de fonctionnement ;
la détermination d'une première dimension et d'une seconde dimension selon la première dimension de données, la seconde dimension de données et le nombre d'unités de fonctionnement,
où un produit de la première dimension et de la seconde dimension est un multiple du nombre d'unités de fonctionnement, et la première dimension est un diviseur du nombre d'unités de fonctionnement, ladite première dimension étant supérieure ou égale à la première dimension de données et ladite seconde dimension étant supérieure ou égale à la seconde dimension de données ; et
la réalisation d'un traitement de remplissage sur les données d'entrée selon la première dimension, la seconde dimension, la première dimension de données et la seconde dimension de données, comprenant :
lorsque la première dimension est plus grande que la première dimension de données, le remplissage des données d'entrée jusqu'à la première dimension dans la direction de la première dimension de données, lesdites données d'entrée le long de la première dimension de données étant remplies par 0 jusqu'à ce qu'un numéro de dimension le long des premières données dimension atteigne la première dimension,
et lorsque la seconde dimension est supérieure à la seconde dimension de données, le remplissage des données d'entrée jusqu'à la seconde dimension dans la direction de la seconde dimension de données, lesdites données d'entrée le long de la seconde dimension de données sont remplies par 0 jusqu'à ce qu'un numéro de dimension le long de la seconde la dimension des données atteigne la seconde dimension,
ainsi, les données d'entrée remplies contiennent M × N dimensions, M représentant la première dimension, et N représentant la seconde dimension ;
la réalisation d'un fonctionnement sur les données d'entrée remplies, un premier groupe de données C étant prélevées et entrées dans C unités de fonctionnement respectivement pour le fonctionnement, C représentant le compte d'unités de fonctionnement, et ensuite un second groupe de données C étant prélevées et entrées dans C unités de fonctionnement respectivement pour le fonctionnement, jusqu'à ce que tous les R groupes de données aient été traités, R=M^{∗}N/C, lesdites données d'entrée remplies étant divisées en R groupes en divisant le long de la seconde dimension en R parties.

2. Procédé de traitement de données d'entrée selon la revendication 1, ladite détermination de la première dimension et de la seconde dimension selon la première dimension de données, la seconde dimension de données et le nombre des unités de fonctionnement comprenant :
la détermination de la première dimension selon la plus petite de la première dimension de données et de la seconde dimension de données, et le nombre d'unités de fonctionnement, où la première dimension est un diviseur du nombre d'unités de fonctionnement, et la première dimension est supérieure ou égale à la plus petite de la première dimension de données et de la seconde dimension de données, et
la détermination de la seconde dimension selon la plus grande de la première dimension de données et de la seconde dimension de données, et le nombre d'unités de fonctionnement, où la seconde dimension est supérieure ou égale à la plus grande de la première dimension de données et de la seconde dimension de données.

3. Procédé de traitement de données d'entrée selon la revendication 1 ou la revendication 2, ladite première dimension de données étant une dimension la plus basse parmi les dimensions des données d'entrée, et ladite seconde dimension de données étant une seconde dimension la plus basse parmi les dimensions des données d'entrée, ladite seconde dimension la plus basse étant une dimension qui est uniquement supérieure à la dimension la plus basse ;
ladite détermination de la première dimension et de la seconde dimension selon la première dimension de données, la seconde dimension de données et le nombre d'unités de fonctionnement comprenant :
la détermination de la première dimension selon la dimension la plus basse et le nombre d'unités de fonctionnement, la première dimension étant supérieure ou égale à la dimension la plus basse, et la première dimension étant le diviseur du nombre d'unités de fonctionnement, et
la détermination de la seconde dimension selon la première dimension, le nombre d'unités de fonctionnement et la seconde dimension la plus basse, ladite seconde dimension étant supérieure ou égale à la seconde dimension la plus basse.

4. Procédé de traitement de données d'entrée selon la revendication 3, ladite réalisation du traitement de remplissage sur les données d'entrée selon la première dimension, la seconde dimension, la première dimension de données et la seconde dimension de données comprenant :
la réalisation d'un traitement de remplissage sur les données d'entrée selon une relation entre la première dimension et la dimension la plus basse, et une relation entre la seconde dimension et la seconde dimension la plus basse.

5. Procédé de traitement de données d'entrée selon la revendication 3 ou la revendication 4, ladite première dimension étant le plus petit diviseur du nombre d'unités de fonctionnement, ledit plus petit diviseur étant supérieur ou égal à la plus petite dimension ; et
la seconde dimension étant supérieure ou égale à la seconde dimension la plus basse, et ledit produit de la seconde dimension et de la première dimension étant le plus petit multiple du nombre d'unités de fonctionnement.

6. Procédé de traitement de données d'entrée selon la revendication 5, ladite réalisation du traitement de remplissage sur les données d'entrée selon la relation entre la première dimension et la dimension la plus basse, et ladite relation entre la seconde dimension et la seconde dimension la plus basse comprenant :
lorsque la première dimension est supérieure à la dimension la plus basse, le remplissage des données d'entrée à la première dimension dans une direction de la dimension la plus basse, et
lorsque la seconde dimension est supérieure à la seconde dimension la plus basse, le remplissage des données d'entrée jusqu'à la seconde dimension dans une direction de la seconde dimension la plus basse.

7. Procédé de traitement de données d'entrée selon l'une quelconque des revendications 1 à 6, comprenant en outre :
lorsque la première dimension de données des données d'entrée est inférieure au nombre des unités de fonctionnement du premier processeur, la détermination de la première dimension et de la seconde dimension selon la première dimension de données et la seconde dimension de données des données d'entrée, et le nombre des unités de fonctionnement, ladite première dimension étant le diviseur du nombre des unités de fonctionnement, et ladite première dimension étant supérieure ou égale à un numéro de dimension de la première dimension de données, le produit de la première dimension et de la seconde dimension étant le multiple du nombre des unités de fonctionnement,
et ladite seconde dimension étant supérieure ou égale à un nombre de dimension de la seconde dimension de données, et
la réalisation d'un traitement de remplissage sur les données d'entrée selon la première dimension, la seconde dimension, la première dimension de données et la seconde dimension de données, ladite première dimension de données étant une dimension dans laquelle les données d'entrée sont d'abord lues et écrites, et ladite seconde dimension de données étant une dimension dans laquelle les données d'entrée sont lues et écrites en second lieu.

8. Appareil de traitement de données d'entrée, comprenant un moyen pour effectuer le procédé selon l'une quelconque des revendications 1 à 7.

9. Support de stockage lisible par ordinateur non volatile comprenant des instructions qui, lorsqu'elles sont exécutées par un ordinateur, amènent l'ordinateur à effectuer le procédé selon l'une quelconque des revendications 1 à 7.
